# EUROPEAN PATENT APPLICATION

(11) **EP 3 623 605 A1**
(43) Date of publication of application: **18.03.2020**
(21) Application number: 19192235.0
(22) Date of filing: 19.08.2019
(51) Int. Cl.: F02C 6/08, F02C 7/18, F02C 9/18

(54) **A DUCT AND A GAS TURBINE ENGINE COMPRISING A DUCT**

(30) Priority: 13.09.2018 GB 201814875
(71) Applicant: Rolls-Royce plc, London N1 9FX (GB)
(72) Inventor: Ingley, Lucian, Derby, Derbyshire DE24 8BJ (GB); Widdowson, Tony, Derby, Derbyshire DE24 8BJ (GB)
(74) Representative: Rolls-Royce plc

(57) **Abstract**

A duct for a gas turbine engine (10), the duct comprising: a first orifice; a second orifice; and a conduit connecting the first orifice and the second orifice, the conduit being formed from a fireproof elastomer.

## Description

The present disclosure relates to a duct for a gas turbine engine. In a specific example, the disclosure relates to a bleed air duct for a geared turbofan engine.

### BACKGROUND ART

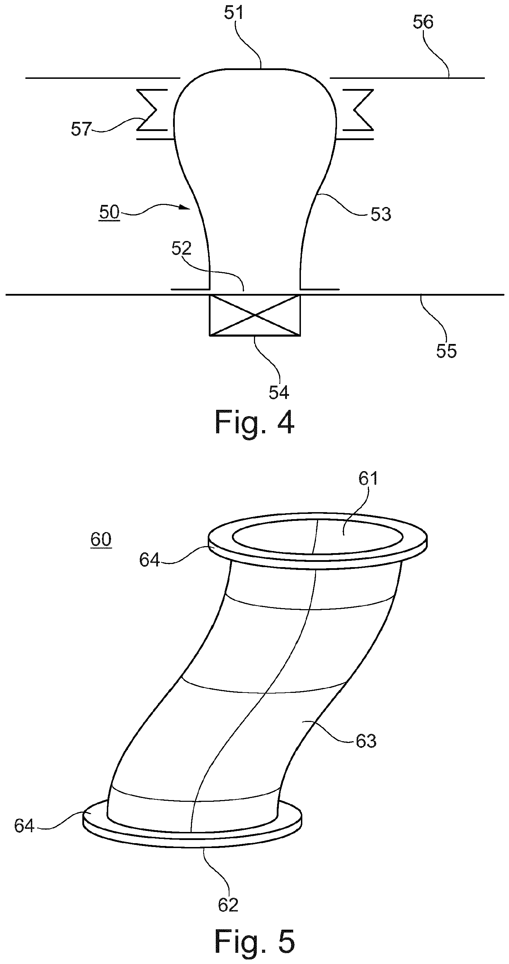

Gas turbine engines may require air (bleed air) to be released from a compressor within the gas turbine engine core in order to relieve pressure within the compressor. A typical bleed air exhaust system 50 is shown in Figure 4. Bleed air may be ejected through outlets 51 within the outer casing 56 of the engine core into the bypass duct of the gas turbine engine. In a typical arrangement a compressor bleed valve 54 is provided in an aperture 52 of the compressor casing (inner core casing 55) and ducted (by a bleed air duct 53) to an aperture 51 in the outer casing 56.

A typical bleed air duct 53 may be formed from metal by a process involving hot forming and/or welding. Due to the temperature of the environment in which a typical bleed air duct operates, metal (e.g. Ti6242) is used for its high heat resistance. However, using metal has limitations, for example it is relatively heavy, and difficult to form into complex shapes. Further, to allow relative movement between parts, complex joints, e.g. a bellows joint 57, may be required, which add weight and complexity.

Other ducts within the gas turbine engine (such as heat exchanger inlet/outlet ducts, core ventilation inlet ducts and turbine case cooling (TCC) inlet ducts) may have the same or similar problems. Core ventilation inlet ducts may be provided in the outer core casing to direct air from the bypass duct to the core to cool the engine core. TCC inlet ducts may be provided in the outer core casing to direct air from the bypass duct to the turbine casing (inner core casing) to cool the turbine casing.

### SUMMARY OF THE INVENTION

According to a first aspect there is provided a duct for a gas turbine engine (10), the duct comprising: a first orifice; a second orifice; and a conduit connecting the first orifice and the second orifice, the conduit being formed from a fireproof elastomer.

Optionally, the conduit comprises an outer wall and an inner wall having a gap there between.

Optionally, the outer and inner wall are both formed from the fireproof elastomer.

Optionally, the gap comprises an insulating medium.

Optionally, the insulating medium is air.

Optionally, the inner wall comprises one or more vents for equalising the pressure between the gap and conduit.

Optionally, the conduit follows a curved path.

Optionally, the curved path comprises a substantially sigmoid section.

Optionally, the conduit comprises a bellows section.

Optionally, the conduit, comprises a flanged portion at the first orifice and/or the second orifice for attaching the duct to the rest of the gas turbine engine.

According to a second aspect there is provided a gas turbine engine for an aircraft, comprising: an engine core comprising a compressor; a bypass duct surrounding the engine core ; and a bleed air duct arranged between the compressor and the bypass duct; wherein the bleed air duct is the duct of the first aspect.

According to a third is aspect there is provided gas turbine engine comprising: an engine core; a bypass duct surrounding the engine core; a heat exchanger provided within the engine core; an inlet duct arranged between the bypass duct and the heat exchanger for providing cooling air to the heat exchanger from the bypass duct; an outlet duct arranged between the bypass duct and the heat exchanger for ejecting heated air from the heat exchanger to the bypass duct; and wherein the inlet duct and/or the outlet duct is the duct of the first aspect.

According to a fourth aspect there is provided a gas turbine engine comprising: an engine core comprising an outer core casing and an inner core casing; a bypass duct surrounding the engine core, outside the outer core casing; a core ventilation duct between the outer core casing and the inner core casing and configured to provide cooling air from the bypass duct to the engine core within the inner core casing; wherein the core ventilation duct is the duct of the first aspect.

According to a fifth aspect there is provided a gas turbine engine comprising: an engine core comprising an outer core casing, an inner core casing and at least one turbine within the inner core casing; a bypass duct surrounding the engine core, outside the outer core casing; a turbine casing cooling duct between the outer core casing and the inner core casing and configured to provide cooling air from the bypass duct to the inner core casing adjacent the at least one turbine; wherein the turbine casing cooling duct is the duct of the first aspect.

Optionally, the gas turbine engine of any one of the previous aspects may comprise: a core comprising a turbine, a compressor and a core shaft connecting the turbine to the compressor, within the core; a fan located upstream of the engine core, the fan comprising a plurality of fan blades; and a gearbox that receives an input from the core shaft and outputs drive to the fan so as to drive the fan at a lower rotational speed than the core shaft.

Optionally, the turbine is a first turbine, the compressor is a first compressor, and the core shaft is a first core shaft; the engine core further comprises a second turbine, a second compressor, and a second core shaft connecting the second turbine to the second compressor; and the second turbine, second compressor, and second core shaft are arranged to rotate at a higher rotational speed than the first core shaft.

Optionally, the engine core further comprises a third turbine, a third compressor, and a third core shaft connecting the third turbine to the third compressor; and the second turbine, second compressor, and second core shaft are arranged to rotate at a lower rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a cross-section through a prior art bleed air system;
Figure 5 is an example duct according to the disclosure;
Figure 6 is a cross-section through the example duct in Figure 5;
Figure 7 is a cross-section through another example duct according to the disclosure;
Figure 8 is another example duct according to the disclosure;
Figure 9 is a cross-section through another example of a duct according to the disclosure;
Figure 10 is a cross-section through another example duct according to the disclosure;
Figure 11 is a close-up of a cross-section through a part of an example duct according to the disclosure;
Figure 12 is a close-up view of the part of the example duct in figure 11;
Figure 13 shows a bleed air exhaust system comprising a duct according to the disclosure;
Figure 14 shows a heat exchanger comprising ducts according to the disclosure;
Figure 15 shows a core ventilation inlet comprising a duct according to the disclosure;
Figure 16 shows to views of a TCC inlet comprising a duct according to the disclosure.

### DETAILED DESCRIPTION

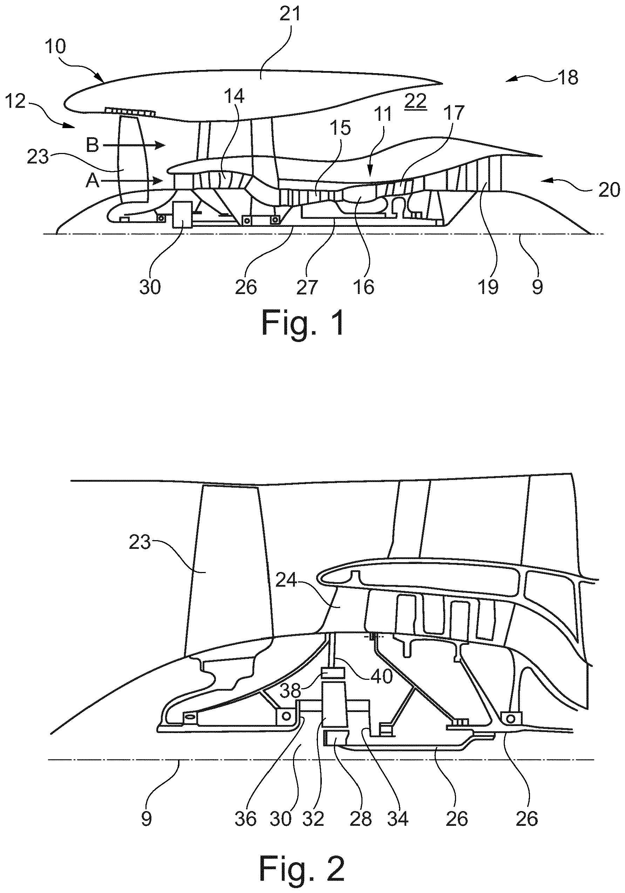

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

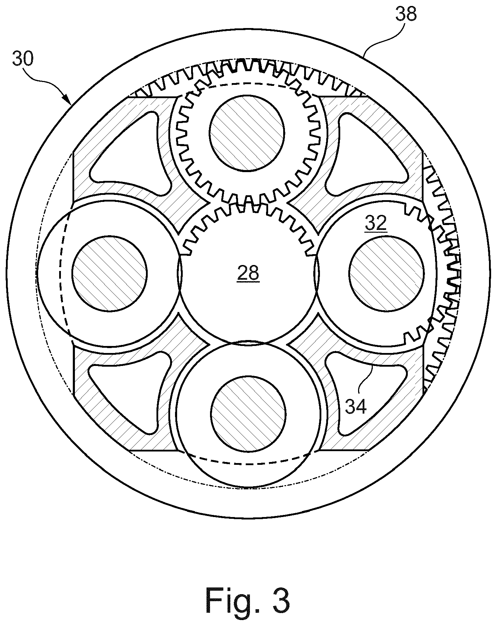

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Figure 5 shows a first example duct 60 for a gas turbine engine 10. As shown in Figure 5 the duct 60 comprises a first orifice 61 and a second orifice 62 connected by a conduit 63. Although not shown in the Figures, the conduit 63 may be branched and/or the duct 60 may comprise further orifices. The conduit 63 is formed from a fireproof elastomer. The duct 60 may be formed from one or more of the following materials: silicone rubber, ceramic fabric, Nomex fabric. High temperature, low volatile silicone rubber provides a thermally stable material for the duct, to resist the general day-to-day conditions and protection from fire. Ceramic fabric provides protection from fire. Nomex fabric provides abrasion resistance. This may be used as an outer layer, for example. The precise configuration depends on the conditions in which the duct is used, for example regarding fire exposure and pressure conditions.

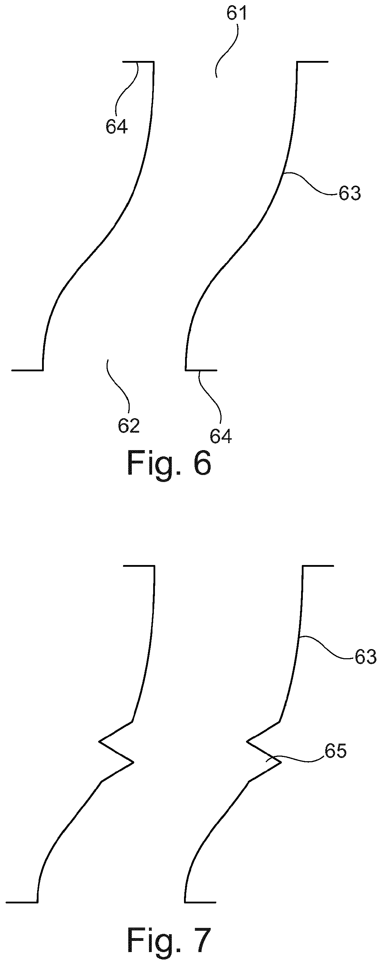

Figure 6 shows a cross-section through the first example duct 60 in Figure 5. As shown in Figures 5 and 6, the duct 60 may follow a curved path. The curved path may comprise a substantially sigmoid section (e.g. a swan neck), as shown in Figure 6. However, as the conduit 63 is formed from an elastomer, which is relatively easy to work compared to metal for example, any shape may be used and selected to suit the specific application for which the duct 60 is to be used.

As shown most clearly in Figure 5, the conduit 63 may have a substantially uniform cross-sectional shape, e.g. through a plane perpendicular to the path followed by the conduit. In this example, the conduit 63 has a substantially circular cross-section. However, any other shaped cross-sections may be used, for example, elliptical, oval, polygonal or polygonal with rounded corners or sides.

Figure 7 shows a variation of the example duct 60 shown in Figures 5 and 6 comprising a bellows section 65, or section comprising an integral bellows joint. Providing a bellows section 65 within the conduit 63 allows greater range of movement between the orifices 62, 63 of the duct 60. Bellows refers to a concertinaed arrangement of the wall of the conduit 63 that allow the conduit 63 to expand and contract to a greater degree.

As shown in Figures 5 to 7, the conduit 63 may comprise a flanged portion 64 at the first orifice 61 and/or the second orifice 62. The flanged portion 64 may be for attaching the duct 60 to the rest of the gas turbine engine 10. For example, the flanged portion 64 may comprise one or more through holes for bolting the flanged portion 64 to part of the gas turbine engine.

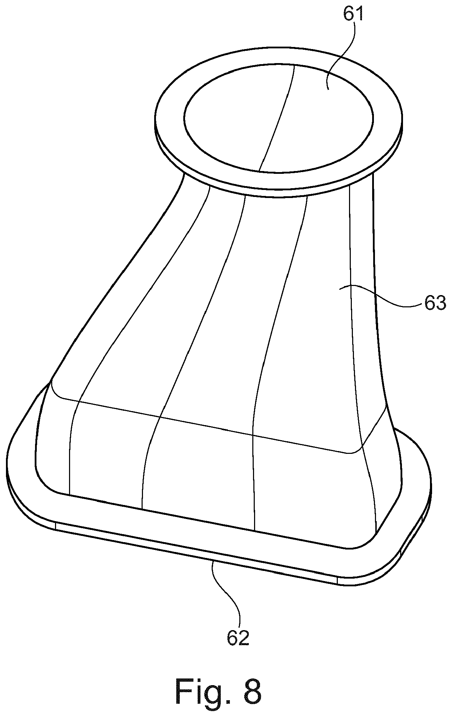

Figure 8 is a second example of a duct 60 for a gas turbine engine 10. The duct 60 is similar to the duct 60 shown in Figure 5, however the conduit 63 does not have a uniform cross-sectional shape. In this example, the first orifice 61 is substantially circular, whereas the second orifice 62 is substantially rectangular with rounded ends and is larger than the first orifice 61. Accordingly, the conduit 63 widens from the first orifice 61 to the second orifice 63. The example duct 60 shown in Figure 8 also follows a curved path, in particular a sigmoid curved path, similarly to the example duct 60 in Figure 5.

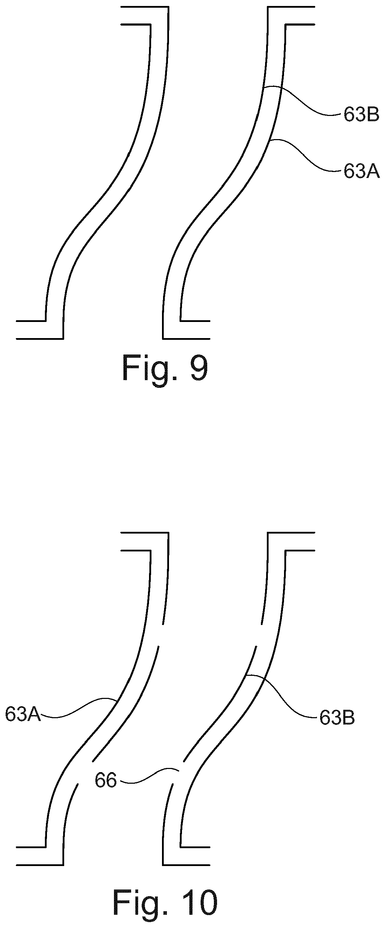

Figure 9 shows an example duct 60 which is a second variation of the duct shown in Figures 5 and 6. However, the variations are equally applicable to the example ducts 60 shown in Figures 7 and 8, and further examples not shown having different arrangements. In the duct 60 of Figure 9, the conduit 63 comprises an outer wall 63A and an inner wall 63B. The outer wall 63A and the inner wall 63B are separated by a gap. Further walls may also be provided outside the outer wall, in some examples.

As shown in Figure 9, the outer wall 63A and the inner wall 63B may have substantially the same shape, i.e. follow the same path and have the same cross-sectional shape. The outer wall 63A and inner wall 63B may be nested with each other. The outer wall 63A and inner wall 63B may both comprise flanged portions 64. These flanged portions 64 may be nested with each other. For example, when the duct 60 is attached to the rest of the gas turbine engine 10 by the flanged portions 64. The flanged portions 64 may provide a seal which seals the gap between the outer wall 63A and inner wall 63B from outside of the conduit 63.

Both the outer wall 63A and inner wall 63B may be formed from the fireproof elastomer. However, alternatively, only one of the outer wall 63A and inner wall 63B may be formed from the fireproof elastomer. For example, if the inner wall 63B only is directly exposed to high temperature and/or fire, the inner wall 63B may accordingly be formed from the fireproof elastomer, whereas the outer wall 63A may be formed from a different material (e.g. a different elastomer). For different applications, the opposite may be true, i.e. the outer wall 63A may be formed from the fireproof elastomer instead. Accordingly, one of the outer wall 63A and inner wall 63B can be regarded as a sacrificial layer, providing redundancy.

The gap between the outer wall 63A and the inner wall 63B may comprise an insulating medium. The insulating medium may prevent or reduce the transport of heat from within the conduit 63 to outside the conduit 63 or vice versa. The insulating medium may be air. However, other media may be used instead, for example different gases, liquids, gels, or fibres.

Figure 10 shows an example duct 60 which is a variation on the example duct shown in Figure 9. In this variation, the inner wall 63A of the conduit 63 comprises one or more vents 66. The vents 66 are openings in the inner wall 63A. The vents 66 allow the pressure within the conduit 63 and within the gap between the walls 63A, 63B to be equalised by allowing fluid flow between the gap and the inside of the conduit 63.

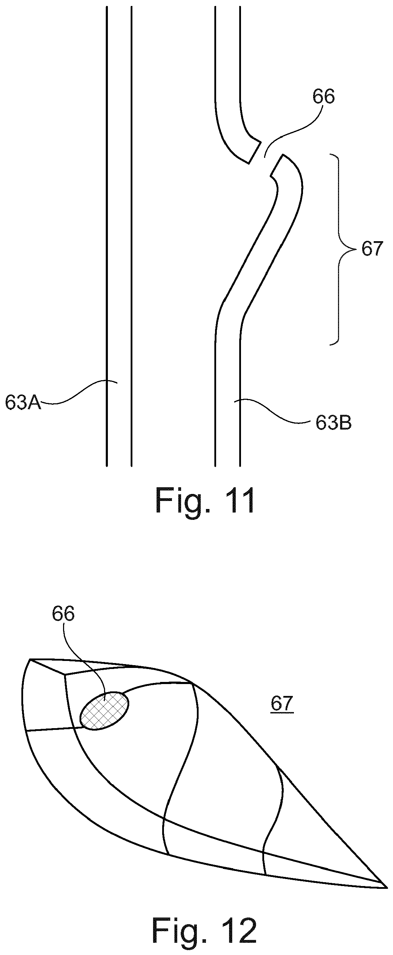

Figure 11 is a close up of a cross-section through an example vent 66. Figure 12 is an orthogonal view of the vent 66 shown in Figure 11. The vent 66 may be provided within an aerodynamically shaped portion 67 of the inner wall 63A. As shown in Figures 11 and 12, the aerodynamically shaped portion 67 may have an aerofoil or teardrop shape. That is, the aerodynamic portion may be in the form of a smoothly curved protrusion which is relatively wide at a front end and relatively narrow at a tail end. Preferably, the vent 66 is provided at the wider, front end. The aerodynamically shaped portion 67 is arranged in the inner wall 63B in alignment with the direction of fluid flow through the conduit 63, when in use within the gas turbine engine 10. For example, as shown in Figure 11, the fluid flow is from the bottom to top of the Figure and the tail end of the aerodynamically shaped portion 67 points towards the source of the fluid flow through the conduit 63.

The duct 60 of the present invention may be used for a variety of functions within the gas turbine engine 10. For example, the duct 60 may be used as a bleed air duct, an inlet or outlet duct for a heat exchanger, a core ventilation inlet duct or a TCC inlet duct.

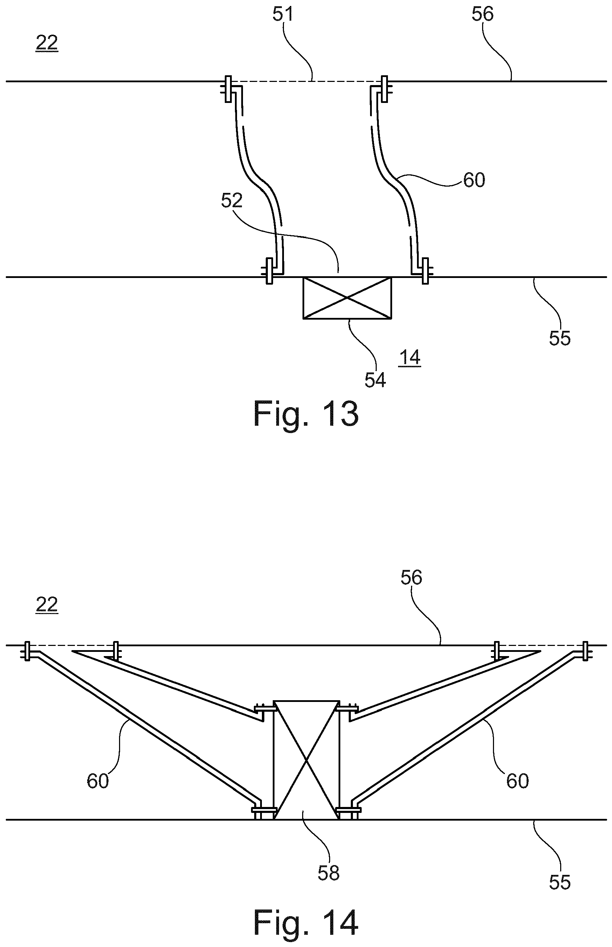

For example, as shown in Figure 13, the duct 60 according to the invention may be a bleed air duct which is arranged between a compressor 14 and the bypass duct 22. More specifically, the duct 60 may be connected between the inner core casing 55 (compressor casing) and the outer core casing 56. A bleed air valve 54 may be provided in, or at, the compressor casing 55 to release bleed air from the compressor 14. The gas turbine engine 10 may comprise low pressure 14, optionally intermediate pressure and high pressure compressors 15. The duct 60 of the present disclosure may be connected at either of these compressors. However, preferably the duct 60 is to be used with the lower 14 or intermediate pressure compressors which operate at a lower temperature than the higher pressure compressor 15.

In another example, as shown in Figure 14, the duct according to the disclosure may be an inlet or outlet duct of a heat exchanger 58. A heat exchanger 58 may be provided within the engine core 11 (e.g. on the inner core casing 55) and an inlet duct may be provided between the bypass duct 22 (e.g. the outer core casing 56) and the heat exchanger 58 for providing cooling air to the heat exchanger 58 from the bypass duct 22. An outlet duct may be provided between the heat exchanger 58 and the bypass duct 22 (i.e. the outer core casing 56) for ejecting heated air from the heat exchanger 58 to the bypass duct 22. The inlet duct and/or the outlet duct may be the duct 60 according to the present disclosure.

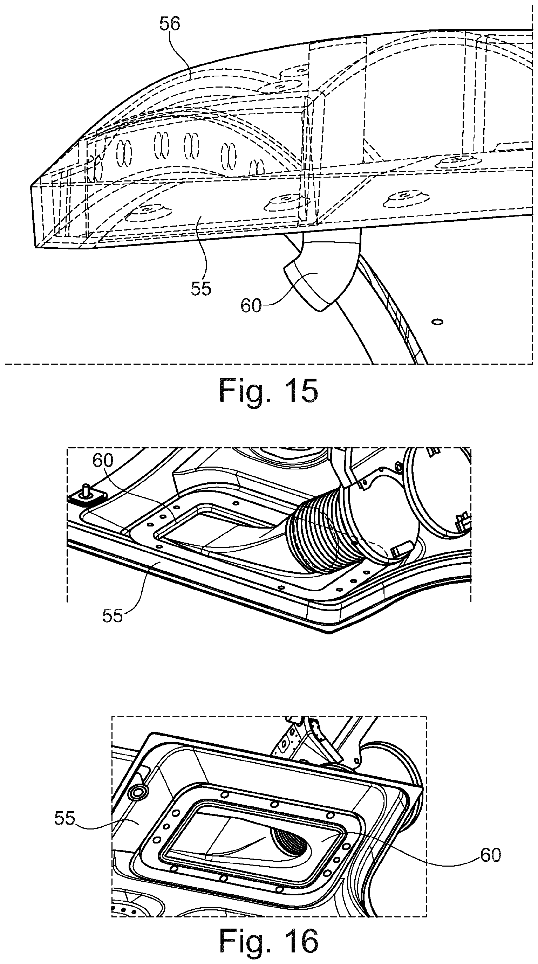

In a further example, as shown in Figure 15, the duct according to the disclosure may be a core ventilation inlet duct. A core ventilation inlet duct may provide air to purge the core. Commonly, there is a requirement to purge the core five times per minute. There are normally multiple (e.g. at least 6) inlets to provide sufficient mass flow to purge the core. As shown in Figure 15, the engine core 11 comprises an outer core casing and an inner core casing. The bypass duct surrounds the engine core, outside the outer core casing. A core ventilation duct is provided between the outer core casing and the inner core casing and is configured to provide cooling air from the bypass duct to the engine core within the inner core casing. In particular, one end of the duct opens into the bypass duct and the other end of the duct opens into the core zone within the inner core casing (or turbine casing).

In a further example, as shown in Figure 16, the duct according to the disclosure may be a TCC inlet duct. Air in this instance is directed from the bypass via the inlet duct to the inner core casing (or turbine casing) though a valve which regulates the flow. The TCC inlet duct provides cooling air to control the temperature of the casings such that they do not exceed a limit which would result in the material properties moving outside intended ranges and to control the gap between the turbine blade and casing to optimise turbine and engine efficiency. As shown in Figure 16, the core ventilation duct is provided between the outer core casing and the inner core casing and is configured to provide cooling air from the bypass duct to the inner core casing. In particular, one end of the duct is connected to a valve ducted to the bypass duct and the other end of the duct opens into the inner core casing (or turbine casing).

In yet further examples, not specifically described herein, the duct according to the present disclosure may be incorporated into systems where air is taken from the core to service other systems.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A duct (60) for a gas turbine engine (10), the duct comprising:
a first orifice (61);
a second orifice (62); and
a conduit (63) connecting the first orifice (61) and the second orifice (62), the conduit (63) being formed from a fireproof elastomer.

2. The duct of claim 1, wherein the conduit comprises an outer wall (63A) and an inner wall (63B) having a gap therebetween.

3. The duct of claim 2, wherein the gap comprises an insulating medium.

4. The duct of claim 2, wherein the inner wall (63B) comprises one or more vents (66) for equalising the pressure between the gap and the inside of the conduit (63).

5. The duct of any preceding claim, wherein the conduit (63) follows a curved path.

6. The duct of claim 5, wherein the curved path comprises a substantially sigmoid section.

7. The duct of any preceding claim, wherein the conduit (63) comprises a bellows section (65).

8. The duct of any preceding claim, wherein the conduit (63), comprises a flanged portion (64) at the first orifice (61) and/or the second orifice (62) for attaching the duct to the rest of the gas turbine engine.

9. A gas turbine engine (10) for an aircraft, comprising:
an engine core (11) comprising a compressor (14);
a bypass duct surrounding the engine core (11); and
a bleed air duct arranged between the compressor (14) and the bypass duct;
wherein the bleed air duct is the duct of any one of claims 1 to 8.

10. A gas turbine engine comprising:
an engine core (11);
a bypass duct (22) surrounding the engine core;
a heat exchanger (58) provided within the engine core;
an inlet duct arranged between the bypass duct and the heat exchanger for providing cooling air to the heat exchanger from the bypass duct;
an outlet duct arranged between the bypass duct and the heat exchanger for ejecting heated air from the heat exchanger to the bypass duct; and
wherein the inlet duct and/or the outlet duct is the duct (60) of any one of claims 1 to 8.

11. A gas turbine engine comprising:
an engine core (11) comprising an outer core casing (56) and an inner core casing (55);
a bypass duct (22) surrounding the engine core, outside the outer core casing;
a core ventilation duct between the outer core casing and the inner core casing and configured to provide cooling air from the bypass duct to the engine core within the inner core casing;
wherein the core ventilation duct is the duct (60) of any one of claims 1 to 8.

12. A gas turbine engine comprising:
an engine core (11) comprising an outer core casing (56), an inner core casing (55) and at least one turbine within the inner core casing;
a bypass duct surrounding the engine core, outside the outer core casing;
a turbine casing cooling duct between the outer core casing and the inner core casing and configured to provide cooling air from the bypass duct to the inner core casing adjacent the at least one turbine;
wherein the turbine casing cooling duct is the duct (60) of any one of claims 1 to 8.

13. The gas turbine engine (10) of any one of claims 9 to 12, comprising:
a core comprising a turbine (19), a compressor (14) and a core shaft (26) connecting the turbine to the compressor, within the core (11);
a fan (23) located upstream of the engine core, the fan comprising a plurality of fan blades; and
a gearbox (30) that receives an input from the core shaft (26) and outputs drive to the fan so as to drive the fan at a lower rotational speed than the core shaft.

14. The gas turbine engine according to claim 13, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.

15. The gas turbine engine according to claim 13 or 14, wherein:
the engine core further comprises a third turbine (17), a third compressor (15), and a third core shaft (27) connecting the third turbine to the third compressor; and
the second turbine, second compressor, and second core shaft are arranged to rotate at a lower rotational speed than the first core shaft.
